# EUROPÄISCHE PATENTANMELDUNG

(11) **EP 0 701 346 A2**
(43) Veröffentlichungstag der Anmeldung: **13.03.1996**
(21) Anmeldenummer: 95113836.1
(22) Anmeldetag: 04.09.1995
(51) Int. Cl.: H04L 12/42

(54) **Verfahren zur konsistenten Nachrichtenübertragung**

(30) Priorität: 09.09.1994 DE 4432075; 19.05.1995 DE 19518357
(71) Anmelder: ABB PATENT GmbH, D-68309 Mannheim (DE)
(72) Erfinder: Dittmar, Ewald, D-67071 Ludwigshafen (DE); Kochs, Hans Dieter, Prof. Dr., D-47259 Duisburg (DE); Dieterle, Werner, D-45478 Mülheim (DE)
(74) Vertreter: Rupprecht, Klaus, Dipl.-Ing.

(57) **Zusammenfassung**

Die Erfindung bezieht sich auf ein Verfahren zur Nachrichtenübertragung zwischen Teilnehmern in einem verteilten System mit Token-Passing. Um - auch im Störungsfall - eine konsistente Nachrichtenübertragung zu erzielen, wird ein spezielles Token-Verfahren verwendet, das auf einer Übereinstimmung des Überwachungs- und Informationsstandes der Teilnehmer basiert, und mit dem im Fehlerfall ein aus einer fortlaufenden Sequenznummer abgeleitetes folgerichtiges Wiederaufsetzen - ohne Beeinträchtigung der Datenkonsistenz - durchgeführt wird. Das Verfahren ist in unterschiedlichen Varianten realisierbar, nämlich mit ringförmiger Informationsführung von Nutzdaten oder der Übertragung von Nutzdaten im physikalischen Multicast und der ringförmigen Führung zugehöriger Kontrollinformation. Das Verfahren kann in leittechnischen Anlagen eingesetzt werden.

## Beschreibung

Die Erfindung bezieht sich auf ein Verfahren zur Nachrichtenübertragung gemäß dem Oberbegriff des Anspruchs 1.

Ein solches, nach dem Token-Passing-Prinzip arbeitendes Verfahren ist beispielsweise aus H.-G. Göhring, F.-J. Kauffels, "Token-Ring: Grundlagen, Strategien, Perspektiven", DATACOM-Verlag Lipinski, 1990, insbesondere Kapitel 2.4 bekannt.

Es existiert eine Reihe ringbasierter Protokolle, die nach dem sogenannten Token-Passing-Prinzip arbeiten und als Token-Protokolle bekannt sind. Sie wurden für verschiedene LAN-Bussysteme standardisiert (IEEE802.4/Token-Bus, IEEE802.5/Token-Ring, ANSI X3T9.5/FDDI). Die Verfahren basieren auf einem Token, einem speziellen Bitmuster, das zur Bus-Zugriffssteuerung verwendet wird. Das Token zirkuliert in einem logischen bzw. physikalischen Ring, der zwischen den einzelnen Teilnehmern aufgebaut wird.

Diese Protokolle gewährleisten allerdings nicht die Datenkonsistenz in verteilten Systemen mit dezentraler Datenhaltung bei Fehlern bzw. Ausfällen von Systemkomponenten; d.h. bei Verwendung dieser Verfahren ist nicht sichergestellt, daß alle Teilnehmer nach Ausfällen bzw. Rekonfigurationen infolge von Ausfällen gleichen Informationsstand bezüglich übertragener Nachrichten besitzen. Datenkonsistenz ist aber die dominante Anforderung an die betrachteten Systeme (vergl. weitere Ausführungen). Weiterhin erweisen sich die Protokolle bei Übertragung von Nachrichten geringer Länge als sehr ineffizient (Token-Ring: jede Nachricht muß eine vollständige Token-Runde zurücklegen, bis die nächste Station senden darf; Token-Bus: Übertragung und Bestätigung für jede Nachricht und jeden Empfänger getrennt). In den betrachteten Systemen wird dieselbe Nachricht im allgemeinen an mehrere Empfänger übertragen (Multicast-Übertragung). Existierende Token-Protokolle ermöglichen nur eine unbestätigte Multicast-Übertragung; bestätigte Übertragung ist nur im Unicast möglich (Übertragung an nur einen Empfänger) und erfordert eine getrennte Bestätigungsphase. Neben diesen grundsätzlichen Problemen sind weitere, protokollspezifische Nachteile vorhanden, beispielsweise Vertauschungen der Reihenfolge übertragener Nachrichten bzw. die fehlende Unterstützung von Bus-Redundanz.

Diese bekannten ringbasierten Verfahren können nicht alle wesentlichen Anforderungen erfüllen, die sich bei einer Anwendung in industriellen Leitsystemen ergeben.

Das aus der DE-C2-40 10 266 bekannte Verfahren zur gesicherten Informationsübertragung, beispielsweise in der Ausführung des Ethernet Network/Broadcast Token Bus (EN/BTB), erfüllt die Anforderungen ebenfalls nicht in vollem Umfang. Die Übertragung erfolgt gesichert, aber nicht konsistent. So sind bei diesem Verfahren Vertauschungen der Reihenfolge sowie Duplikate von Nachrichten bei Ausfällen/Rekonfigurationen möglich. Sämtliche Information wird im Broadcast übertragen, dies führt bei Verwendung moderner Rechnertechnik zu einer relativ hohen Rechnerbelastung. EN/BTB erfordert programmierbare (intelligente) Kommunikations-Controller; moderne Rechner sind aber ausschließlich mit nichtintelligenten Controllern ausgestattet. EN/BTB unterstützt nicht die Verwendung standardisierter Protokolle.

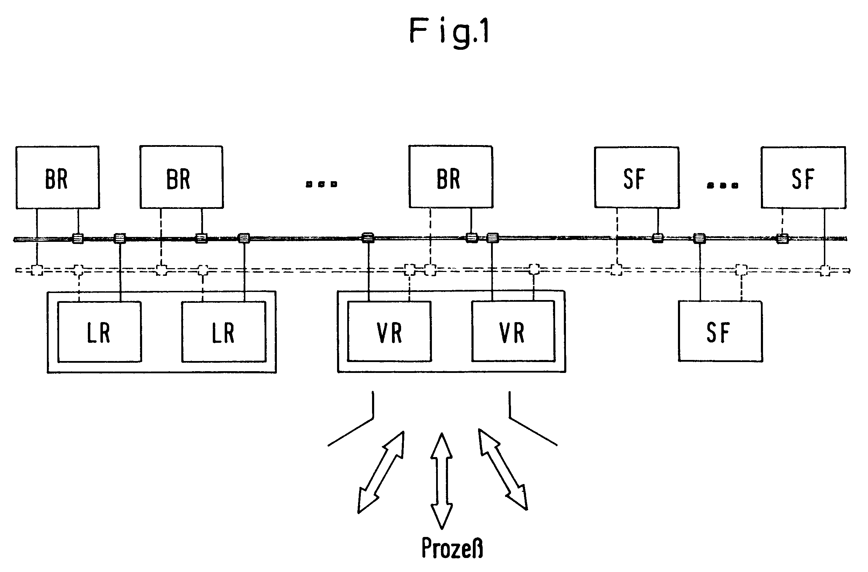

Der typische Aufbau eines Leitsystems, sowie die Anforderungen an ein solches Leitsystem bzw. an ein darin benutztes Übertragungsverfahren wird nachstehend anhand von Fig. 1 erläutert.

**Fig. 1** zeigt schematisch den Aufbau eines Leitsystems, bestehend aus mehreren Rechnerkomponenten, wie Vorrechner (VR) zur Prozeßkopplung, Leitrechner (LR) zur Bearbeitung leittechnischer Grundfunktionen, die als SCADA-Funktionen bekannt sind, Bedienplatzrechner (BR) zur Prozeß-Visualisierung und zusätzlichen Rechnern zur Bearbeitung optionaler Sekundärfunktionen (SF). Die Rechner sind über ein Lokales Netzwerk (LAN), typischerweise Ethernet, gekoppelt. Zur Erhöhung der Verfügbarkeit des Gesamtsystems werden Rechner wichtiger Funktion (im Bild: VR und LR) sowie der LAN-Bus redundant ausgeführt. Die Rechner operieren auf einem jeweils lokal gehaltenen, fortlaufend aktualisierten Prozeßabbild (dezentrale Datenhaltung). Änderungsdaten werden als Nachrichten versandt. Aufgrund der Verteilung bzw. Redundanz von Funktionen und Datenbeständen ergeben sich komplexe Datenflüsse im verteilten System.

Die wesentlichen Anforderungen an solche Leitsysteme sind hohe Verfügbarkeit, kurze, garantierte Reaktionszeiten sowie Konsistenz der verteilten Datenbestände.

Datenkonsistenz ist Voraussetzung für den bestimmungsgemäßen Betrieb der Leitsysteme. Sie ist trivial im fehlerfreien Fall, erfordert aber bei Ausfällen/Rekonfigurationen im System spezifische Maßnahmen zur nahtlosen Fortführung des Nachrichtenaustauschs. Daraus resultieren sehr hohe Anforderungen an die Kommunikation in verteilten Leitsystemen; sie umfassen:
- Nachrichtenaustausch ohne Verlust, Verfälschung, Vervielfältigung und Vertauschung von Information (Führungskonsistenz). Vertauschung bezieht sich dabei auf Nachrichten eines Absenders, die sogenannte FIFO-Reihenfolge.
- Nachrichten an mehrere Empfänger müssen an alle Empfänger oder an keinen übertragen werden (Atomaritätsprinzip).
- Übertragung von Nachrichten in jeweils identischer Reihenfolge an alle Empfänger (totale Reihenfolge von Nachrichten).
- Vermeidung von Überholeffekten von Ursprungsinformation und abgeleiteter Information (kausale Reihenfolge von Nachrichten).
- Schnelle, deterministische Übertragung von Nachrichten.
- Schnelle Ausfallerkennung von Rechnern bzw. LAN-Bus durch ständige gegenseitige Überwachung.
- Bei Ausfall von Rechnern automatische Ausgliederung derselben aus dem Nachrichtenverkehr.
- Bei Ausfall des LAN-Bus automatische Umschaltung auf redundantes LAN.
- Geringe LAN- und Rechner-Belastung durch System-Kommunikation.
- Datenaustausch zwischen in Hard- und Software unterschiedlichen Rechnern.

Datenkonsistenz umfaßt die vier erstgenannten Anforderungen an die Nachrichtenübertragung. Probleme bezüglich der Führungskonsistenz entstehen durch Übertragungsfehler bzw. Ausfälle von Bus oder Empfänger. Das Atomaritätsprinzip wird durch den Ausfall der Informationsquelle selbst beeinträchtigt. Eine Vertauschung von Nachrichten (totale und kausale Reihenfolge) tritt auf bei indeterministischem Zeitverhalten im System, z.B. bei Rekonfigurationen bzw. Nachrichtenwiederholungen infolge von Ausfällen bzw. Übertragungsstörungen.

In verteilten Rechnersystemen, insbesondere bei Verwendung des Betriebssystems UNIX, wird das Client/Server-Konzept für den Datenaustausch verwendet. Dieses Konzept ist auf eine zentralisierte Datenhaltung und auf Systeme ohne spezifische Echtzeitanforderungen zugeschnitten, es erfüllt die obigen Anforderungen nicht. Erforderlich ist die Kommunikation nach dem Erzeuger/Verbraucher-Prinzip (Producer/Consumer-Prinzip). Die standardisierten TCP/IP-, UDP/IP- bzw. ISO/OSI-Protokolle sind auf das Client/Server-Konzept ausgerichtet, ihre Eigenschaften sind der beschriebenen Aufgabenstellung nicht angemessen. Dennoch ist ihre Verwendung aus Kostengründen sowie zur Kommunikation zwischen Rechnern unterschiedlichen Typs notwendig.

Die herkömmliche Verwendung dieser Protokolle - mit Implementierung von Kommunikations-Verbindungen zwischen verteilten Prozessen entsprechend einer durch die Applikation vorgegebenen Struktur (logische Punkt-zu-Punkt-Verbindungen) - hat schwerwiegende Nachteile. Dies gilt insbesondere für das vorherrschende, verbindungsorientierte TCP/IP-Protokoll bzw. in ähnlicher Weise auch für ISO/OSI-Protokolle. Folgende Gründe lassen sich anführen:
- Einzel-Übertragung von Nachrichten führt bei Verwendung üblicher nichtintelligenter Kommunikations-Controller zu hohem Übertragungsaufwand (Kontext-Wechsel und Protokoll-Bearbeitung im Host). Zur Reduzierung der Rechner- und LAN-Last ist eine Sammelübertragung von Nachrichten mit kombinierter Zeit-/Mengensteuerung notwendig.
- Die Informationsselektierung, d.h. die Auswahl der an die Empfänger zu übertragenden Nachrichten erfolgt bei standardisierten Protokollen sendeseitig. Der Sender führt pro Empfänger eine Aktualisierungsliste, dies führt zu zusätzlicher Rechnerbelastung.
- Standardisierte Protokolle erlauben nur gerichtet eine bestätigte Übertragung. Dies führt bei den betrachteten Systemen zu einem Multiplikatoreffekt für Packen und Übertragen von Nachrichten: In größeren Leitsystemen wird jede Nachricht mehrfach gepackt und über den Bus übertragen. Bei redundant ausgeführtem Sender ist zusätzlich zur Übertragung zu den Empfängern jede Verbindung getrennt mit dem Nebenrechner zu synchronisieren.
- Eine automatische Überwachung von Kommunikations-Verbindungen ist nicht Bestandteil der TCP-Spezifikation und somit nicht in jeder Protokoll-Version vorhanden. Die Konfigurierung des Überwachungszyklus (Default-Einstellung: 2h) ist ebenfalls nicht für jede Protokoll-Version möglich.
- Bei gegenseitiger Überwachung der Rechner über Verbindungsabbruch im Fehlerfall (Timeout) ist nicht für alle Protokoll-Versionen die Anpassung der Timer an die konkreten Zeitanforderungen möglich. TCP/IP schreibt eine minimale Zeitdauer von 100s bis zu einem Verbindungsabbruch vor, die Einstellung kleinerer Werte ist nicht standard-konform. Als Lösung zur gegenseitigen Überwachung bleibt nur ein zusätzlicher (redundanter) Bestätigungsmechanismus auf Anwendungsebene mit entsprechendem Overhead.
- Aufgrund der gerichteten Übertragung ergibt sich ein enormer Verbindungsaufwand im System. Jeder Rechner ist mit jedem anderen zu koppeln. Bei redundantem LAN-Bus sind Verbindungen über beide Busse zu betreiben. Beispiel: Ein mittleres Leitsystem, bestehend aus 8 Rechnern und redundantem LAN-Bus erfordert 2x8x7 = 112 Vollduplex- bzw. 224 Halbduplexverbindungen.
- Die Systemstruktur ist in die Software programmiert bzw. parametriert (Semantik: "Sende Nachricht *an*", "Empfange Nachricht *von*"). Die Realisierung erweist sich als aufwendig, speziell die Fehlerverarbeitung.
- Aufgrund der Strukturabhängigkeit der Software ergeben sich Rückwirkungen im Fehlerfall durch das notwendige Producer/Consumer-Prinzip.
- Standardisierte Protokolle gestatten bei Ausfall des LAN-Busses keine automatische Umschaltung auf einen redundanten Bus.
- Ausfälle/Rekonfigurationen im System führen zum Datenverlust in den Protokollpuffern. Dies erfordert die zusätzliche Pufferung der Sendedaten auf Applikationsebene.
- Datenkonsistenz erfordert mehrphasige Übertragungskonzepte. Diese sind aufwendig zu realisieren (hoher Zeit- und Nachrichtenaufwand) und erfordern die Steuerung der zeitlichen Abfolge der Übertragung. TCP-Empfangsbestätigungen können zur Realisierung von 2-Phasen-Konzepten nicht ausgewertet werden, es ist ein zusätzlicher Bestätigungsmechanismus auf Anwendungsebene notwendig.
- Totale und kausale Reihenfolge von Nachrichten erfordert bei herkömmlicher Verwendung standardisierter Protokolle aufwendige Maßnahmen, beispielsweise Nachrichten-Historien.

Standardisierte Kommunikationsprotokolle erfüllen also bei herkömmlicher Verwendung die Anforderungen an Leitsysteme nicht.

Davon ausgehend liegt der Erfindung die Aufgabe zugrunde, ein Verfahren zur konsistenten Nachrichtenübertragung anzugeben, das die vorgenannten Anforderungen erfüllt, unter gleichzeitiger Anwendbarkeit standardisierter Kommunikations-Protokolle.

Diese Aufgabe wird bei einem Verfahren gemäß dem Oberbegriff des Anspruchs 1 durch dessen kennzeichnende Merkmale gelöst.

Das erfindungsgemäße Verfahren ist in insgesamt drei Grundvarianten realisierbar, nämlich einem als erste Variante bezeichneten Ring-Multicast(R-MC)-Verfahren und einem als zweite Variante bezeichneten Datagramm-Multicast(D-MC)-Verfahren, das wiederum - je nach Zugriffsverfahren - in zwei Ausführungen (D-MC/Z, D-MC/S) realisierbar ist.

Die Verfahrensvarianten - nachstehend auch kurz als Verfahren bezeichnet - enthalten teils unterschiedliche, teils übereinstimmende Merkmale, wie im Anspruch 1 angegeben und auch unten beschrieben ist.

Beim Verfahren Ring-Multicast (R-MC) wird ein Token für den Nachrichtentransport, zur Steuerung des Sendezugriffs sowie für die gegenseitige Überwachung der Rechner verwendet (Daten-Token).

Beim Verfahren Datagramm-Multicast mit zugriffsgesteuerter Nachrichtenübertragung (D-MC/Z) wird ein Token zur Steuerung des Sendezugriffs, zum Austausch von Bestätigungs- und Reihenfolgeinformation sowie zur gegenseitigen Überwachung verwendet (Kontroll-Token). Die Nachrichtenübertragung selbst erfolgt bei Token-Besitz im physikalischen Broad- bzw. Multicast mit Datagrammen.

Beim Verfahren Datagramm-Multicast mit spontaner Nachrichtenübertragung (D-MC/S) wird ein Token zum Austausch von Bestätigungs- und Reihenfolgeinformation sowie zur gegenseitigen Überwachung verwendet (Kontroll-Token). Die Nachrichtenübertragung erfolgt spontan, unabhängig von der Position des Token, im physikalischen Broad- bzw. Multicast mit Datagrammen.

Die Verfahren D-MC/Z und D-MC/S werden nachfolgend auch als Datagramm-Verfahren bzw. datagrammorientierte Verfahren bezeichnet. Bestätigungs-, Reihenfolge- und Statusinformation werden nachfolgend unter dem Begriff Kontrollinformation zusammengefaßt.

Beim Verfahren Ring-Multicast (R-MC) handelt es sich um ein logisches Multicast-Konzept. Die datagrammorientierten Verfahren (D-MC) lassen sich sowohl im physikalischen Multi- als auch im Broadcast realisieren. Im folgenden wird zwischen Multi- und Broadcast nicht weiter unterschieden, es wird der allgemeinere Begriff des Multicast verwendet.

Vorteilhafte Ausgestaltungen der Verfahren ergeben sich aus Unteransprüchen und der nachstehenden Beschreibung der Erfindung.

Die Verfahrensvarianten sind in ihrem Grundaufbau ähnlich und insofern gleichwertig, als jedes der Verfahren alle Anforderungen an den Nachrichtentransport ohne Einschränkung erfüllt. Darüber hinaus besitzt jedes der Verfahren charakteristische Eigenschaften im Vergleich mit den anderen. Diese Merkmale kommen bei einer Verfahrens-Realisierung, d.h. unter konkreten Randbedingungen zum tragen; sie werden bei der nachstehenden Verfahrensbeschreibung erläutert. Die erfindungsgemäßen Verfahren sind an keinen Standard gebunden. Eine vorteilhafte Ausgestaltung ist auf der Basis standardisierter LAN-Bussysteme und Kommunikations-Protokolle möglich. Bereits vorhandene Teilfunktionen können genutzt werden, beispielsweise CRC-Prüfsumme standardisierter Protokolle bzw. Kollisionserkennung mit automatischer Wiederholung bei Verwendung eines Ethernet-LAN (IEEE802.3). Standardisierte Protokolle werden in einer problemspezifischen Weise verwendet. Dies gestattet es, die Anforderungen an Leitsysteme zu erfüllen und die prinzipiellen Vorzüge standardisierter Protokolle zu nutzen, unter Vermeidung der erläuterten Problempunkte. Eine Realisierung auf der Basis standardisierter Protokolle wird nachfolgend an einem Ausführungsbeispiel erläutert.

Das Verfahren Ring-Multicast (R-MC) ist ein reines Ringkonzept. Das Token dient der Nachrichtenübertragung, der Steuerung des Bus-Zugriffs, der Sequentialisierung der Nachrichten-Reihenfolge sowie der gegenseitigen Überwachung. Die Tokenlänge wird dynamisch dem aktuellen Nachrichtenaufkommen angepaßt. Die Übertragung des Token kann unbestätigt erfolgen, da jeder Teilnehmer durch Überwachung des nächsten Tokenempfangs den Umlauf des Token kontrollieren kann (impliziter Bestätigungsmechanismus im Ring). Das Verfahren Ring-Multicast ist zugeschnitten auf kleine und mittlere Leitsysteme. Gemäß einer vorteilhaften Ausgestaltung sind Nachrichten auch blockweise im Token übertragbar.

Bei den datagrammorientierten Verfahren (D-MC) werden Nachrichten im physikalischen Multicast übertragen. Gemäß einer vorteilhaften Ausgestaltung werden Nachrichten in Blöcken zusammengefaßt und als Datagramme übertragen. Die Datagramm-Übertragung selbst erfolgt unbestätigt. Das Token dient der Übertragung von Kontrollinformation, d.h. von Bestätigungen und Reihenfolgeinformation zu den übertragenen Nachrichtenblöcken, sowie der gegenseitigen Überwachung. Über den Kontroll-Token wird eine bestätigte Übertragung der Nachrichtenblöcke implementiert, es kommt ein Mechanismus mit negativer Bestätigung zur Anwendung: Übertragene Nachrichtenblöcke werden vom Absender im Token als gesendet markiert, die weiteren Teilnehmer prüfen den Erhalt der Nachrichtenblöcke und tragen bei Nichterhalt eine negative Bestätigung im Token ein. In diesem Falle muß der Absender die Übertragung wiederholen.

Beim zugriffsgesteuerten Verfahren (D-MC/Z) wird auch die Sendeberechtigung im Token weitergereicht. Beim Verfahren mit spontaner Übertragung (D-MC/S) sind alle Stationen jederzeit sendeberechtigt, unabhängig von der aktuellen Position des Kontroll-Token.

Die Datagramm-Verfahren sind auf große Leitsysteme mit hohem Datenaufkommen ausgerichtet. Aufgrund der Übertragung im physikalischen Multicast ergibt sich im Vergleich zum Ring-Multicast-Konzept (R-MC) eine Minderung der Sende- und Buslast. Der Token umfaßt nur Kontrollinformation, d.h. die Länge und die Umlaufzeit werden reduziert. Weiterhin ist in den betrachteten Systemen die Kommunikationslast stark asymmetrisch. Alle Prozeßdaten werden über den Leitrechner geführt und von diesem an die weiteren Rechner übertragen. Die datagrammorientierten Verfahren sind an diese Belastungssituationen angepaßt. Nur Teilnehmer mit vorhandenen Sendedaten führen eine Multicast-Übertragung durch. Bei sehr hohem Datenaufkommen sind beim Verfahren mit spontaner Übertragung (D-MC/S) mehrere Datagramm-Übertragungen während eines Tokenumlaufs möglich.

Alle drei Alternativen gewährleisten die Datenkonsistenz bei Fehlern im verteilten System. Diese Eigenschaft beruht auf der Übereinstimmung der Token-Position mit dem Übertragungsstand von Nachrichten im System. Beim Verfahren Ring-Multicast wird der Übertragungsstand von Nachrichten unmittelbar durch den Token widergespiegelt. Bei den datagrammorientierten Verfahren wird der Übertragungsstand durch die im Token geführte Kontrollinformation übertragener Nachrichten(-blöcke) wiedergegeben: Übertragene Nachrichtenblöcke werden vom Sender bei Token-Erhalt mit ihrer Kennung im Token eingetragen, vom Empfänger erst bei Token-Erhalt über diese Kennung freigegeben, d.h. auch bei diesem Verfahren spiegelt das Token den aktuellen Übertragungsstand wider.

Im Token ist eine fortlaufende, von jedem Absender inkrementierte Sequenznummer eingetragen. Das Token dient der Fehlererkennung und -lokalisierung. Aufgrund der Übereinstimmung von Token-Position und Übertragungszustand läßt sich im Fehlerfall über die Ermittlung der letztgültigen Token-Position auch der aktuelle Übertragungsstand der einzelnen Teilnehmer exakt rekonstruieren. Dies ermöglicht die nahtlose Fortführung der Übertragung unter Wahrung der Führungskonsistenz. Das Atomaritätsprinzip ist aufgrund der ringförmigen Übertragung von Nutz- bzw. Kontrolldaten, d.h. der Übertragung an jeweils nur einen Empfänger grundsätzlich erfüllt. Aufgrund des Serialisierungseffekts des Token bezüglich übertragener Nachrichten (R-MC) bzw. der Kontrollinformation übertragener Nachrichtenblöcke (D-MC) erfolgt die Nachrichtenübertragung mit FIFO-Reihenfolge, totaler und kausaler Reihenfolge.

Defekte Teilnehmer werden automatisch ausgegliedert, der Nachrichtentransport erfolgt auf Anwendungsebene auch im Fehlerfall rückwirkungsfrei. In weiterer Ausgestaltung kann eine automatische Busumschaltung bei Störungen im Kommunikationssystem unter Wahrung der Datenkonsistenz vorgesehen werden. Vorteilhafte Ausgestaltungen der Fehlertoleranzmaßnahmen werden anhand eines Ausführungsbeispiels erläutert.

Durch die Verwendung eines Token-Protokolls besitzen die Verfahren ein stabiles und berechenbares Zeitverhalten. Dies gilt auch für das Verfahren D-MC/S, welches kollisionsbehaftet arbeitet. Die Anzahl der Sendevorgänge pro Tokenumlauf wird bei diesem Verfahren begrenzt, beispielsweise auf 20% der maximalen Belastung bei Ausführung des Verfahrens auf der Basis eines Ethernet-LAN. Nennenswerte Verzögerungen durch Kollisionen werden hierdurch vermieden.

Die erfindungsgemäßen Verfahren ermöglichen eine bestätigte Multicast-Übertragung. Dies, sowie die Verwendung eines kombinierten Verfahrens zur gegenseitigen Überwachung und zum Austausch von Nachrichten, Bestätigungen und Reihenfolgeinformation sowie der blockweisen Übertragung von Nachrichten führt zu einer deutlichen Reduzierung der LAN- und Rechnerbelastung, der Protokoll-Komplexität und des Realisierungsaufwands im Vergleich zu bestehenden Konzepten.

Die drei erfindungsgemäßen Verfahren werden nachstehend anhand von Ausführungsbeispielen näher erläutert.

### Ausführungsbeispiele zu den Verfahren

Die Ausführungsbeispiele wurden als Kommunikationssysteme in einem verteilten Rechnersystem implementiert. Die Systeme basieren auf dem standardisierten UDP/IP-Protokoll. UDP/IP arbeitet verbindungslos, es ermöglicht eine unbestätigte Übertragung von Datagrammen im Uni-, Multi- und Broadcast. Als Bussystem wird ein Ethernet-LAN (IEEE802.3) verwendet. Die zugrunde gelegte standardisierte Hard- und Software umfaßt automatische Sicherungsmaßnahmen gegen Datenverfälschung (CRC-Prüfsumme) sowie zur Kollisionsbearbeitung. Bei erkannten Kollisionen erfolgt eine automatische Frame-Wiederholung. Aus diesen Gründen werden Kollisionen bzw. Fehler durch verfälschte Daten nachstehend nicht weiter berücksichtigt.

Die ausgetauschten Informationseinheiten weisen abhängig vom Datenaufkommen stark unterschiedliche Längen auf (im Bereich von 10Byte bis 30kByte). Große Informationseinheiten werden von den darunterliegenden Netzwerk- und Protokollschichten fragmentiert, d.h. in kleinere zu übertragende Einheiten aufgeteilt. Jedes Fragment wird mit protokollspezifischer Information erweitert. Um einen einheitlichen, von der Länge der Informationseinheiten und von den unterlagerten Protokoll- und Netzwerkschichten unabhängigen Übertragungs-Mechanismus zu schaffen, sowie zur Behandlung des Verlusts einzelner Fragmente größerer Informationseinheiten, wurde im Rahmen einer vorteilhaften Ausgestaltung ein blockorientierter Übertragungs-Mechanismus realisiert. Die ausgetauschten Informationen werden als zusammenhängende Blöcke übertragen, die Blockübertragung arbeitet atomar. Bei fehlerhafter Übertragung bzw. Verlust von Block-Fragmenten wird ein Informationsblock vollständig verworfen.

Die nachfolgende Beschreibung erfolgt getrennt für das Ring-Multicast-Verfahren sowie für die Datagramm-Verfahren. Letztere sind ähnlich aufgebaut, sie werden gemeinsam erläutert, auf Unterschiede wird an jeweiliger Stelle hingewiesen.

Es wird auf nachstehende Zeichnungsfiguren bezug genommen:
- Fig. 1: Aufbau eines Leitsystems,
- Fig. 2A bis 2F: Übertragungsablauf beim Ring-Multicast(R-MC)-Verfahren,
- Fig. 3: Daten-Token-Aufbau bei R-MC,
- Fig. 4A bis 4F: Übertragungsablauf beim datagrammorientierten Verfahren mit zugriffsgesteuerter Übertragung (D-MC/Z),
- Fig. 5A bis 5F: Übertragungsablauf beim datagrammorientierten Verfahren mit spontaner Übertragung (D-MC/S),
- Fig. 6: Kontroll-Token-Aufbau bei D-MC,
- Fig. 7: Nachrichtenblock-Aufbau bei D-MC.

Die Erläuterung der Ausführungsbeispiele ist jeweils gegliedert in eine Beschreibung des zeitlichen Ablaufs, Erläuterungen der Protokoll-Eigenschaften sowie eine Beschreibung der ausgetauschten Informationseinheiten. Die grundsätzliche Beschreibung erfolgt für ein verteiltes System, bestehend aus drei Teilnehmern (T1-T3). Der zeitliche Ablauf ist in mehreren Phasen dargestellt (A-F).

### 1. Ring-Multicast (R-MC)

### 1.1 Beschreibung

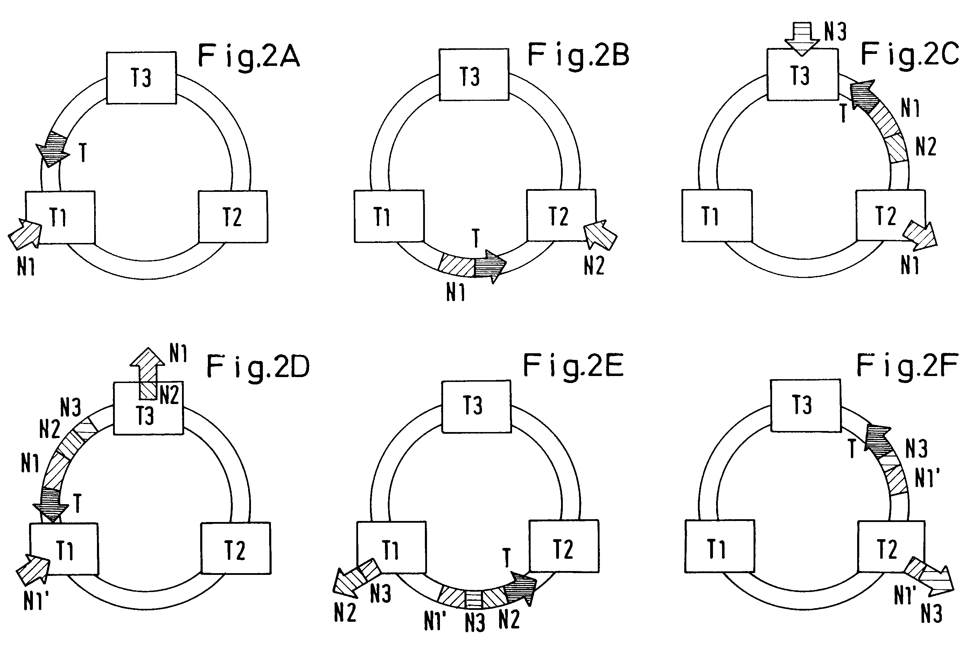

**Die Fig. 2A bis 2F** zeigen den zeitlichen Ablauf der Übertragung im fehlerfreien Fall für das Verfahren Ring-Multicast (R-MC). Ausgangszustand sei die Zirkulation eines leeren Daten-Token T (**Fig. 2*A***). Teilnehmer T1 besitzt zu übertragende Nachrichten N1, er trägt diese bei Tokenerhalt im Token ein und reicht den Token T an den Nachfolger T2 weiter (**Fig. 2*B***). Der Nachfolger T2 hält Nachrichten N2 zur Übertragung bereit. Er kopiert bei Erhalt des Token T dessen Inhalt in einen lokalen Empfangspuffer, fügt die eigenen Sendedaten N2 am Tokenende an und reicht den Token weiter (**Fig. 2*C***). Nach der Weitergabe des Token werden aus der lokalen Kopie des Token Nachrichten für die Anwendung selektiert (im Beipiel die Nachrichten N1 des Teilnehmers T1). Für Teilnehmer T3 ist die Vorgehensweise analog zu T2 (**Fig. 2*D***). Nach einem vollständigen Umlauf des Token T löscht Teilnehmer T1 die eigenen Nachrichten N1 aus dem Token, kopiert den Tokeninhalt in den lokalen Empfangspuffer, fügt neue Daten N1' am Tokenende an, reicht den Token an Teilnehmer T2 weiter und selektiert Nachrichten anderer Teilnehmer (**Fig. 2*E***). Teilnehmer T2 bearbeitet den Token T analog zu Teilnehmer T1, im Beispiel hat er keine weiteren Nachrichten zu versenden (**Fig. 2*F***).

Jeder Teilnehmer kann bei Tokenbesitz Nachrichten beliebiger Anzahl und Länge im Token eintragen (variable Tokenlänge).

### 1.2 Verfahrensübergreifende Eigenschaften (alle drei Konzepte)

Anhand des Konzepts Ring-Multicast lassen sich einige verfahrensübergreifende Eigenschaften erläutern, die auch für die nachfolgend erläuterten Datagramm-Konzepte gelten:
- Ein Ring-Aufbau kann von jedem Teilnehmer initiiert werden.
- Stationen müssen zunächst in den Ring integriert werden, um am Nachrichtenaustausch teilnehmen zu können. Hierzu ist eine Anmeldung der neu aufzunehmenden Station beim Vorgänger notwendig.
- Die Übertragung aller Informationseinheiten erfolgt blockorientiert.
- Das Token wird an alle Teilnehmer mit gleicher Häufigkeit gesendet, d.h. es existiert keine höhere Priorisierung für bestimmte Teilnehmer.
- Information zur Analyse der Zustände von Nachfolger und LAN-Bus wird asynchron zum Token übertragen.
- Information zur Neuaufnahme eines Teilnehmers wird asynchron zum Token übertragen.
- Jede Station überwacht ihren Nachfolger, defekte Stationen werden vom Vorgänger ausgegliedert. Die Rekonfiguration erfolgt ohne Beeinträchtigung der Datenkonsistenz.
- Bei Busausfall erfolgt eine automatische Umschaltung auf den redundanten Bus. Die Rekonfiguration erfolgt ohne Beeinträchtigung der Datenkonsistenz.

### 1.3 Protokoll-Eigenschaften: R-MC

- Vergleiche "Verfahrensübergreifende Eigenschaften".
- Nutzdaten werden ringförmig im System geführt (gerichtete Übertragung des Daten-Token).
- Das Daten-Token besitzt variable Länge.
- Jeder Teilnehmer darf bei Token-Erhalt eigene Nachrichten im Token eintragen.
- Es gibt keine ausgewählte Station im System, während der Rekonfigurationsphase wird die Station mit dem zuletzt gültigen Daten-Token temporär zum Ringmaster.
- Kollisionsfreier Datenverkehr im Normalbetrieb.
- Empfangsdaten werden nach der Token-Weitergabe selektiert und freigegeben.

### 1.4 Ausgetauschte Informationseinheiten

Zusätzlich zum bereits erläuterten Daten-Token werden noch weitere Informationseinheiten benutzt, die zur Fehlerbehandlung und zur Eingliederung neuer Teilnehmer benötigt werden, wie weiter unten noch näher erläutert wird. Die Informationseinheiten sind nachstehend aufgelistet.

### Daten-Token

Enthält die zu übertragenden Nachrichten, geordnet nach den einzelnen Teilnehmern im Ring.

### Linkcheck-Request

Anfrage eines Ringteilnehmers an seinen Nachfolger zur Teilnehmer- und Busüberwachung.

### Linkcheck-Acknowledge

Antwort eines Ringteilnehmers auf einen Linkcheck-Request.

### Init-Token

Enthält die System-Statusinformation und die Sequenznummer des Absenders. Der Absender teilt seinem Nachfolger die lokale System-Statusinformation mit und bewirbt sich gleichzeitig als Ringmaster.

### Konfigurations-Token

Enthält die System-Statusinformation und die Sequenznummer des Ringmasters. Der Ringmaster teilt den weiteren Ringteilnehmern eine geänderte Ringkonfiguration mit (nach Neuaufnahme eines Teilnehmers bzw. Ausfällen).

### Enter-Request

Teilnehmer will Ring initialisieren oder als Ringteilnehmer aufgenommen werden. Information wird vom aufnahmewilligen Teilnehmer an den gewünschten Vorgänger geschickt.

### Leave-Token

Teilnehmer teilt den anderen mit, daß er den Ring verlassen möchte.

Alle Informationen werden unbestätigt übertragen. Token-Information wird im Ring an allen Teilnehmern vorbeigeführt. Die weiteren Informationseinheiten werden zwischen jeweils zwei Teilnehmern ausgetauscht, die Übertragung erfolgt asynchron zum Token.

### 1.5 Blockaufbau

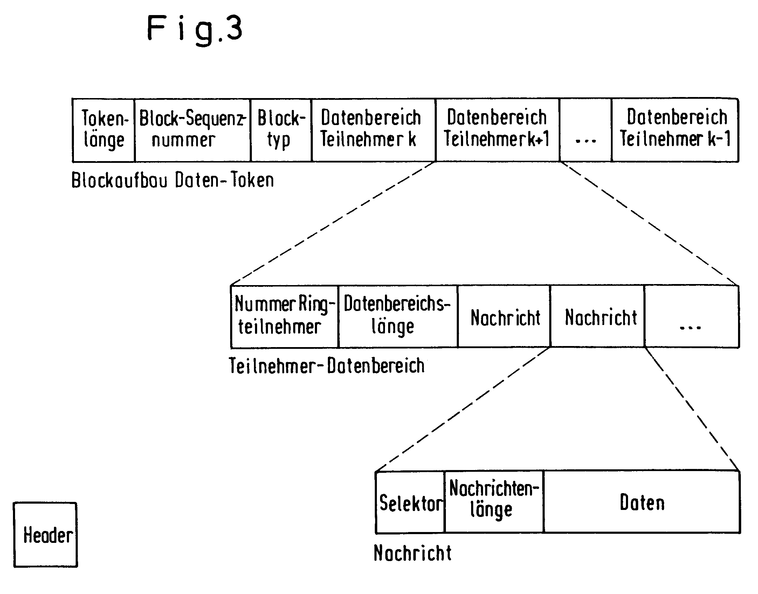

**Fig. 3** zeigt beispielhaft den Aufbau des Daten-Token für das Verfahren Ring-Multicast (R-MC). Dem Header entsprechend dem erfindungsgemäßen Verfahren mit Angaben zur Tokenlänge, der Block-Sequenznummer des Token und zum Blocktyp (hier: Daten-Token) folgen die Datenbereiche der einzelnen Ringteilnehmer, jeweils mit variabler Länge. Jeder Datenbereich umfaßt einen teilnehmerbezogenen Header mit der Angabe des Teilnehmers und der Datenbereichslänge und nachfolgend die Nachrichten dieses Teilnehmers. Die Nachrichten bestehen wiederum aus einem Header und den Daten selbst. Der Nachrichten-Header setzt sich zusammen aus einem Selektor zur Zuordnung von Nachrichten und der Angabe der Nachrichtenlänge.

Die in Fig. 3 in den Datenbereichen eingetragenen Teilnehmerbezeichnungen K, K+1, usw. bis K-1 sind so zu verstehen, daß K ein beliebiger Teilnehmer, z.B. Teilnehmer T2 (vergl. Fig. 2A-2F) sein kann, wobei dann der Teilnehmer K+1 der Teilnehmer T3 ist, und Teilnehmer K-1 der Teilnehmer T1 ist. Im Daten-Token stehen somit in diesem Beispiel an letzter Stelle die Daten des Teilnehmers T1.

Nicht eingezeichnet sind durch unterlagerte Protokoll- und Netzwerkschichten hinzugefügte Informationen (bei Fragmentierung teilweise mehrfach): Ethernet-, IP- und UDP-Header.

Sämtliche Informationseinheiten werden blockorientiert zwischen den Protokoll-Schichten ausgetauscht.

Init- und Konfigurations-Token beinhalten im Datenteil die System-Statusinformation. Bei den asynchronen Informationseinheiten steht im Datenbereich die Kennung des Absenders bzw. der Datenbereich ist leer, d.h. es wird nur der Blockheader übertragen.

### 2. Datagramm-Multicast (D-MC/Z und D-MC/S)

Bei den datagrammorientierten Verfahren (D-MC) erfolgt die Daten-Übertragung im physikalischen Multicast mit den Datagramm-Diensten des UDP/IP-Protokolls. Moderne Betriebssysteme ermöglichen neben der Übertragung im physikalischen Multicast auch die Selektierung empfangener Frames durch Hardware-Mechanismen.

Die Datagramm-Übertragung erfolgt blockorientiert und unbestätigt. Zur Realisierung einer gesicherten Übertragung, der Definition einer einheitlichen Empfangsreihenfolge sowie zur gegenseitigen Überwachung wird ein Kontroll-Ring zwischen den einzelnen Kommunikations-Teilnehmern aufgebaut. Beim Verfahren Datagramm-Multicast mit zugriffsgesteuerter Übertragung (D-MC/Z) erfolgt die Multicast-Übertragung von Nutzdaten nur bei Besitz des Kontroll-Tokens. Beim Verfahren mit spontaner Übertragung (D-MC/S) erfolgen Nutzdaten-Übertragung und Austausch des Kontroll-Token asynchron, d.h. die Übertragung eines Nachrichtenblocks ist zu jedem Zeitpunkt möglich.

Ein Nachrichtenblock kann Nachrichten beliebiger Anzahl und Länge beinhalten.

### 2.1 Beschreibung der Verfahren

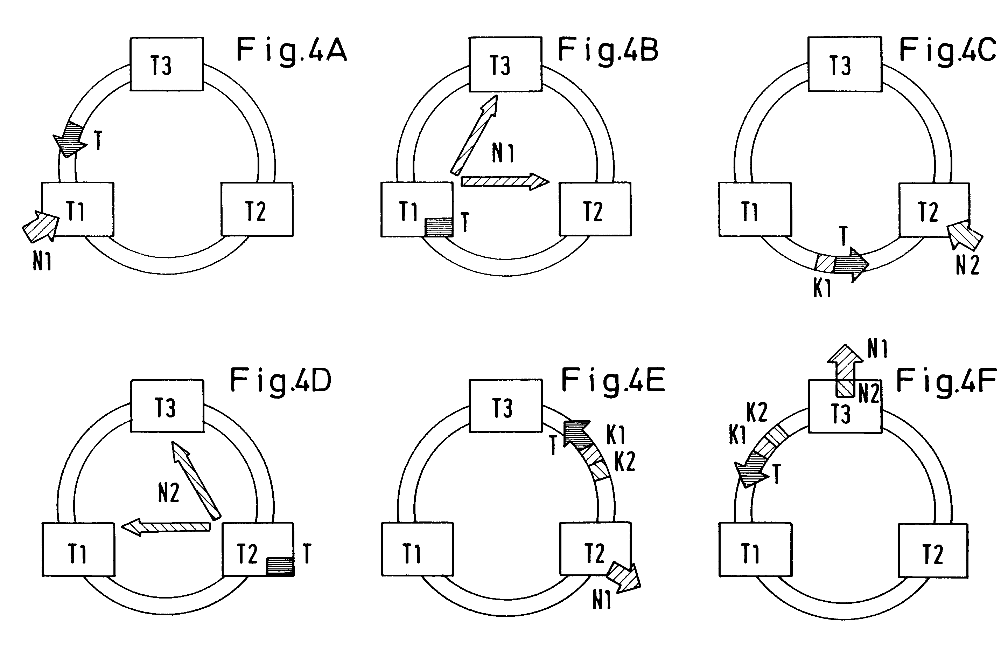

Der zeitliche Ablauf der Übertragung für das datagrammorientierte Verfahren mit zugriffsgesteuerter Übertragung (D-MC/Z) ist in den **Fig. 4A bis 4F** dargestellt. Ausgangszustand sei die Zirkulation eines leeren Kontroll-Token T. Teilnehmer T1 besitzt zu übertragende Nachrichten N1 (**Fig. 4*A***). Er führt bei Tokenerhalt die Datagramm-Übertragung im Multicast durch und trägt die Kontroll-Information K1 des übertragenen Nachrichtenblocks in ein Kontrollfeld im Token ein (**Fig. 4*B***). Das Kontrollfeld umfaßt die Kennung des Absenders, eine senderbezogene Sequenznummer sowie eine globale Sequenznummer, welche den Nachrichtenblöcken zugeordnet wird. Das Token führt hierzu eine globale Sequenznummer mit sich. Diese wird vom jeweiligen Token-Besitzer für jeden gesendeten Nachrichtenblock erhöht, der senderbezogenen Sequenznummer zugeordnet und gemeinsam mit dieser im Kontrollfeld eingetragen. Über die Zuordnung der globalen Sequenznummer werden alle Nachrichtenblöcke mit einer eindeutigen und fortlaufenden Kennung versehen. Diese Kennung gestattet eine einheitliche Empfangsreihenfolge übertragener Nachrichtenblöcke.

Anschließend wird das Token an den Nachfolger T2 weitergereicht (**Fig. 4*C***). Die Empfängerstationen belassen empfangene Nachrichtenblöcke zunächst in den Empfangspuffern, ohne diese für die Anwendung freizugeben. Der Nachfolger T2 hält ebenfalls Nachrichten N2 zur Übertragung bereit, er überträgt diese bei Tokenerhalt im Multicast (**Fig. 4*D***) und trägt im Token die Kennung K2 des Nachrichtenblocks N2 im Kontrollfeld ein. Anschließend überprüft er, ob im Kontroll-Token als übertragen markierte Nachrichtenblöcke (K1) im Empfangspuffer vorhanden sind. Ist dies der Fall, so werden empfangene Nachrichtenblöcke (N1) entsprechend der globalen Sequenznummer geordnet und für die Verarbeitung freigegeben (**Fig. 4*E***). Wurde ein im Kontroll-Token als übertragen markierter Nachrichtenblock nicht empfangen, so wird im Kontrollfeld des Nachrichtenblocks eine negative Bestätigung eingetragen, der Absender muß die Übertragung erneut durchführen. Zusätzlich prüft der Besitzer des Kontroll-Token, ob eigene Sendedaten des letzten Token-Zyklus von allen Teilnehmern empfangen wurden. Wenn ja, wird der Datenblock im Sendepuffer sowie der Eintrag im Kontroll-Token gelöscht. Wenn nein (negative Bestätigung im Kontrollfeld), wird die Übertragung mit der alten Sequenznummer erneut durchgeführt. Die globale Sequenznummer wird ebenfalls beibehalten. Dies ist notwendig, um auf Empfangsseite Duplikate zu erkennen und nachgelieferte Nachrichtenblöcke mit korrekter Reihenfolge für die Anwendung freizugeben.

Die Abfolge der Verarbeitung erfolgt für den Teilnehmer T3 sowie während weiterer Umläufe analog zur obigen Beschreibung (**Fig. 4*F***).

Die Zuordnung einer globalen Sequenznummer zu Nachrichtenblöcken und deren Vergabe über den Token garantiert die totale Reihenfolge der Nachrichtenblöcke und der darin enthaltenen Nachrichten. Die kausale Reihenfolge von Blöcken und Nachrichten ergibt sich ebenfalls aus der ringförmigen Übertragung der Kontrollinformation (Sequentialisierungseffekt).

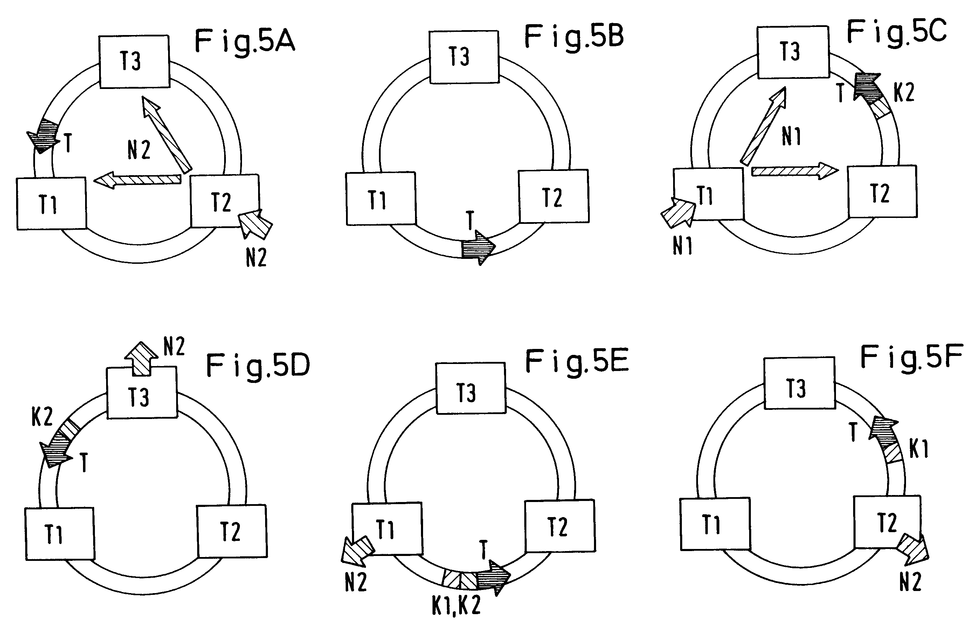

Die **Fig. 5A bis 5F** zeigen den zeitlichen Ablauf der Übertragung beim Verfahren mit spontaner Übertragung (D-MC/S). Sendewillige Teilnehmer, im Bild T2, senden ihre Nachrichten N2 spontan im Multicast, asynchron zum zirkulierenden Kontroll-Token (**Fig. 5*A*,*B***). Bei Erhalt des Kontroll-Token trägt Teilnehmer T2 die Kontroll-Information K2 des übertragenen Nachrichtenblocks N2 in ein Kontrollfeld im Token ein (**Fig. 5*C***). Der Aufbau und die Abfolge der Bearbeitung empfangener Nachrichtenblöcke und des Kontroll-Token ist identisch mit dem Verfahren mit zugriffsgesteuerter Übertragung (D-MC/Z). Nach erfolgter Token-Bearbeitung wird dieses an den Nachfolger T3 weitergereicht. Weitere asynchrone Übertragungen von Nachrichtenblöcken durch beliebige Teilnehmer sind zu jedem Zeitpunkt möglich (**Fig. 5*C***).

Die Freigabe empfangener Nachrichtenblöcke erfolgt wie beim zugriffsgesteuerten Verfahren bei Token-Besitz (**Fig. 5 *D*, *E*, *F***). Die Mechanismen zur Steuerung der Nachrichten-Reihenfolge sind ebenfalls identisch mit denen des zugriffsgesteuerten Verfahrens.

### 2.2 Protokoll-Eigenschaften: D-MC/Z

- Vergleiche "Verfahrensübergreifende Eigenschaften".
- Kontrollinformation wird ringförmig im System geführt (gerichtete Übertragung des Kontroll-Token).
- Das Kontroll-Token besitzt variable Länge.
- Die Sendeberechtigung wird über den Token gesteuert. Jeder Teilnehmer darf bei Token-Erhalt eigene Nachrichtenblöcke als Datagramme verschicken und diese im Token eintragen.
- Es gibt keine ausgewählte Station im System, während der Rekonfigurationsphase wird die Station mit dem zuletzt gültigen Kontroll-Token temporär zum Ringmaster.
- Kollisionsfreier Datenverkehr im Normalbetrieb.
- Während des letzten Tokenumlaufs empfangene Datenblöcke werden bei Tokenerhalt sortiert und an die Anwendung freigegeben.
- Daten werden im Broadcast bzw. Multicast übertragen.
- Bestätigungen, Reihenfolge-Information, System-Zustandsinformation und Bus-Zugriffsvergabe werden im Token geführt.
- Die Empfangs-Bestätigung erfolgt blockweise. Dies ist möglich, da durch die Mechanismen der Blockübertragung gewährleistet ist, daß Informationseinheiten beliebiger Länge nur vollständig übertragen werden (bei Verlust einzelner Fragmente werden Blöcke komplett verworfen).

### 2.3 Protokoll-Eigenschaften: D-MC/S

- Vergleiche "Verfahrensübergreifende Eigenschaften".
- Kontrollinformation wird ringförmig im System geführt (gerichtete Übertragung des Token).
- Das Kontroll-Token besitzt variable Länge.
- Alle Stationen sind zur Übertragung von Nutzdaten (Datagrammen) jederzeit sendeberechtigt. Bei Token-Erhalt werden im letzten Tokenzyklus verschickte Nachrichtenblöcke im Token eingetragen.
- Es gibt keine ausgewählte Station im System, während der Rekonfigurationsphase wird die Station mit dem zuletzt gültigen Kontroll-Token temporär zum Ringmaster.
- Während des letzten Tokenumlaufs empfangene Datenblöcke werden bei Tokenerhalt sortiert und an die Anwendung freigegeben.
- Daten werden im Broadcast bzw. Multicast übertragen.
- Bestätigungen, Reihenfolge-Information und System-Zustandsinformation werden im Token geführt.
- Während eines Tokenumlaufs sind mehrere Übertragungen von Datenblöcken möglich.
- Die Empfangs-Bestätigung erfolgt blockweise. Dies ist möglich, da durch die Mechanismen der Blockübertragung gewährleistet ist, daß Informationseinheiten beliebiger Länge nur vollständig übertragen werden (bei Verlust einzelner Fragmente werden Blöcke komplett verworfen).

### 2.4 Ausgetauschte Informationseinheiten (D-MC/Z und D-MC/S)

Zusätzlich zum bereits erläuterten Nachrichtenblock (Datagramm) und Kontroll-Token werden noch weitere Informationseinheiten benutzt, die zur Fehlerbehandlung und zur Eingliederung neuer Teilnehmer benötigt werden, wie weiter unten noch näher erläutert wird. Die Informationseinheiten sind nachstehend aufgelistet. Die ausgetauschte Information ist für beide Datagramm-Verfahren identisch.

### Nachrichtenblock

Enthält die zu übertragenden Nachrichten eines Ring-Teilnehmers.

### Kontroll-Token

Enthält die Kontrollinformationen, (Bestätigungs-, Reihenfolge- und Statusinformation), geordnet nach den einzelnen Teilnehmern im Ring.

### Linkcheck-Request:

Anfrage eines Ringteilnehmers an seinen Nachfolger zur Teilnehmer- und Busüberwachung.

### Linkcheck-Acknowledge

Antwort eines Ringteilnehmers auf einen Linkcheck-Request.

### Init-Token

Enthält die System-Statusinformation und die Sequenznummer des Absenders. Der Absender teilt seinem Nachfolger die lokale System-Statusinformation mit und bewirbt sich gleichzeitig als Ringmaster.

### Konfigurations-Token

Enthält die System-Statusinformation und die Sequenznummer des Ringmasters. Der Ringmaster teilt den weiteren Ringteilnehmern eine geänderte Ringkonfiguration mit (nach Neuaufnahme eines Teilnehmers bzw. Ausfällen).

### Enter-Request

Teilnehmer will Ring initialisieren oder als Ringteilnehmer aufgenommen werden. Information wird vom aufnahmewilligen Teilnehmer an den gewünschten Vorgänger geschickt.

### Leave-Token

Teilnehmer teilt den anderen mit, daß er den Ring verlassen möchte.

### 2.5 Blockaufbau

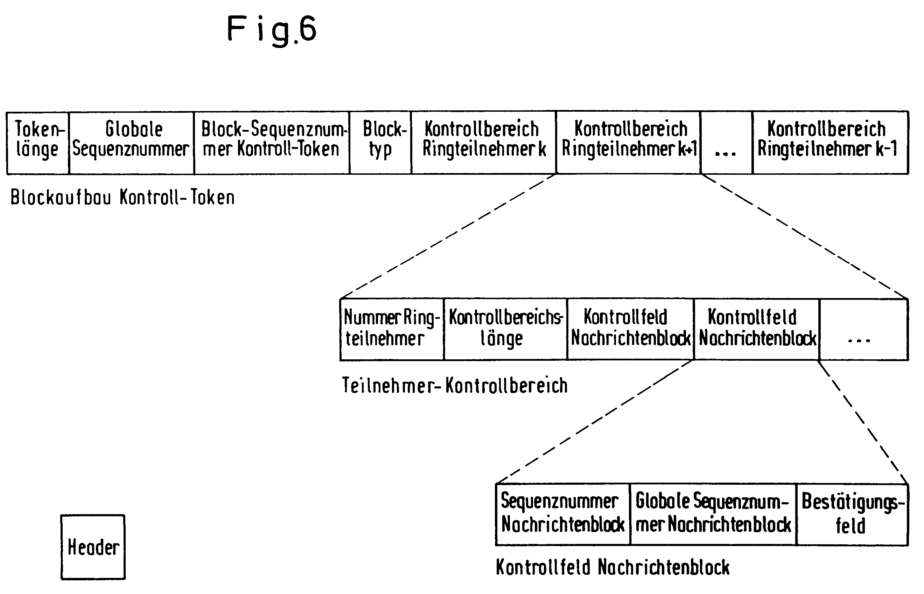

**Fig. 6** zeigt exemplarisch den Aufbau des Kontroll-Token für die datagrammorientierten Verfahren (D-MC). Dem Header entsprechend dem erfindungsgemäßen Verfahren mit Angaben zur Token-Länge, der globalen Sequenznummer, der Block-Sequenznummer des Token und zum Blocktyp (hier: Kontroll-Token) folgen die Kontrollbereiche der einzelnen Ringteilnehmer, jeweils mit variabler Länge. Jeder Kontrollbereich umfaßt einen teilnehmerbezogenen Header mit der Angabe des Teilnehmers und der Kontrollbereichslänge und nachfolgend die Kontrollfelder zu den versendeten Nachrichtenblöcken dieses Teilnehmers. Jedem übertragenen Nachrichtenblock ist ein Kontrollfeld im Kontroll-Token zugeordnet. Ein Kontrollfeld besteht aus der Angabe des Absenders, der teilnehmerspezifischen Sequenznummer und der globalen Sequenznummer des Nachrichtenblocks.

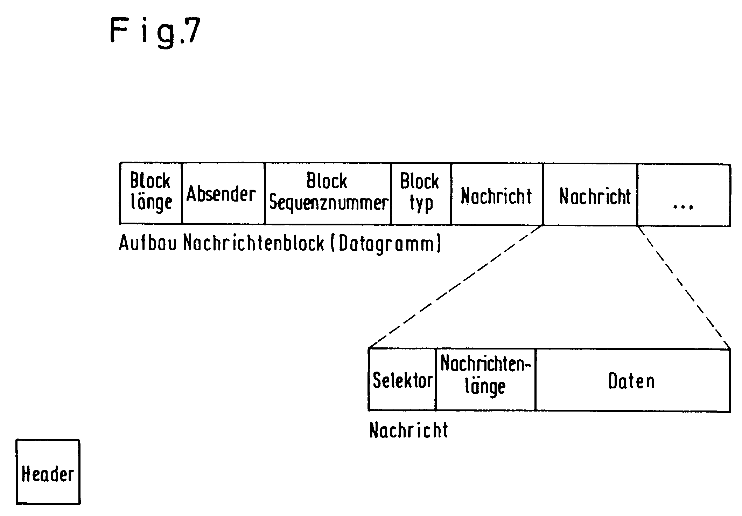

Der beispielhafte Aufbau eines Nachrichtenblocks nach dem datagrammorientierten Verfahren (D-MC) ist in **Fig. 7** dargestellt. Dem Block-Header mit der Angabe der Blocklänge, der Kennung des Absenders, der Block-Sequenznummer und des Blocktyps (hier: Nachrichtenblock) folgen die Nachrichten des Absenders. Diese bestehen wiederum aus einem Header und den Daten selbst. Der Nachrichten-Header setzt sich zusammen aus einem Selektor zur Zuordnung von Nachrichten und der Angabe der Nachrichtenlänge.

Nicht eingezeichnet sind durch unterlagerte Protokoll- und Netzwerkschichten hinzugefügte Informationen (bei Fragmentierung teilweise mehrfach): Ethernet-, IP- und UDP-Header.

Sämtliche Informationseinheiten werden blockorientiert zwischen den Protokoll-Schichten ausgetauscht.

Init- und Konfigurations-Token beinhalten im Datenteil die System-Statusinformation. Die weiteren asynchronen Informationseinheiten sind entsprechend dem Nachrichtenblock aufgebaut. Abhängig vom Typ der Informationseinheit steht im Datenbereich die Kennung des Absenders bzw. der Datenbereich ist leer, d.h. es wird nur der Blockheader übertragen.

### 3. Bearbeitung von Fehlern/Ausfällen

Die Fehlertoleranz-Mechanismen zur Erkennung, Lokalisierung und Behandlung von Fehlern/Ausfällen im System sind bezüglich der Sicherstellung der Datenkonsistenz sowie eines unterbrechungsfreien Systembetriebs von fundamentaler Bedeutung. Die Kerneigenschaft der beschriebenen Verfahren ist die Übereinstimmung des Tokenstands (Überwachung) und des Informationsstands der einzelnen Teilnehmer. Dies ermöglicht die exakte Rekonstruktion des Informationsstands im Fehlerfall und gewährleistet die Datenkonsistenz.

Die Maßnahmen zur Erkennung, Lokalisierung und Behandlung von Fehlern (Fehlerverarbeitung) werden nachfolgend anhand eines Ausführungsbeispiels erläutert; sie sind für alle drei erfindungsgemäßen Verfahren identisch.

Es bestehen folgende Anforderungen an die Fehlerverarbeitung:
- Fehler/Ausfälle sind zu erkennen und zu lokalisieren.
- Ausgefallene Rechner sind auszugliedern, bei Busausfall ist die Übertragung auf dem redundanten Bus fortzusetzen.
- Die geänderte System-Statusinformation ist konsistent an alle (intakten) Teilnehmer zu übertragen.
- Der Datenverkehr ist von dem Teilnehmer mit dem zuletzt gültigen Daten- bzw. Kontroll-Token fortzusetzen.
- Die Fehlerverarbeitung hat schnell und unter Wahrung der Datenkonsistenz zu erfolgen.

Aufgrund der unbestätigten Übertragung von Information führen alle Fehler bzw. Ausfälle im System zu einem Verlust des Token. Ein Verlust wird durch Timeout erkannt (Token-Timeout). Die Fehlerverarbeitung bei erkanntem Token-Verlust gliedert sich in mehrere Phasen:
- Linkcheck-Phase,
- Init-Token-Phase,
- Konfigurations-Token-Phase.

Teilnehmer, die einen Fehler erkannt haben (Token-Timeout) prüfen den Zustand des Nachfolgers bzw. des LAN-Bus, indem zum Nachfolger ein Linkcheck-Request übertragen wird. Dieser wird von intakten Nachfolgern mit einem Linkcheck-Acknowledge beantwortet. Bei erfolgreichem Linkcheck wird an den Nachfolger ein Init-Token verschickt, was diesen auffordert seinerseits den Nachfolger zu prüfen. Bei nicht erfolgreichem Linkcheck wird (nach mehrmaligen Versuchen) der defekte Nachfolger ausgegliedert, die geänderte System-Statusinformation im Init-Token eingetragen. Das Init-Token wird in diesem Fall an den Nachfolger des ausgegliederten Teilnehmers übertragen. Dies gilt bei Einfachfehlern im System. Bei Mehrfachfehlern wird das Init-Token an den nächsten intakten Teilnehmer im Ring übertragen. Der Übertragung des Init-Token geht grundsätzlich die Linkcheck-Phase voraus.

Die Init-Token-Phase dient gleichzeitig der Ermittlung des Ring-Teilnehmers mit dem zuletzt gültigen Daten- bzw. Kontroll-Token (Ringmaster). Der Ringmaster ist kein statisch festgelegter Teilnehmer, er wird im Fehlerfall temporär, d.h. abhängig vom aktuellen Übertragungsstand ermittelt. Der Ringmaster setzt nach erfolgter Fehlerverarbeitung die Übertragung des Daten- bzw. Kontroll-Token fort. Zur Ermittlung des Ringmaster wird das Daten- bzw. Kontroll-Token mit einer Sequenznummer versehen, welche von jedem Teilnehmer beim Sendevorgang erhöht wird. Während der Fehlerverarbeitung wird von jedem Teilnehmer beim Versenden eines Init-Token in diesem die Sequenznummer des zuletzt versendeten Daten- bzw. Kontroll-Token eingetragen, d.h. jeder Teilnehmer "bewirbt" sich als möglicher Ringmaster. Wird ein Init-Token mit kleinerer Sequenznummer als der lokalen Sequenznummer des zuletzt versendeten Daten- bzw. Kontroll-Token empfangen, so wird das empfangene Init-Token verworfen, es wird ein Init-Token mit der eigenen Sequenznummer weiter übertragen. Besitzt ein empfangenes Init-Token eine größere als die lokale Sequenznummer, so wird dieses weiter übertragen (mit ggf. geänderter Konfiguration). Als Ergebnis dieses Algorithmus bleibt nur das Init-Token des Ringmaster übrig. Der Ringmaster erkennt sich als solcher durch den vollständigen Umlauf seines Init-Token. Im Init-Token des Ringmaster ist nach einem vollständigen Umlauf die aktuelle System-Konfiguration enthalten (ausgegliederte Teilnehmer sind aus der Liste aktiver Rechner entfernt). Der Ringmaster überträgt in der nachfolgenden Phase diese Konfiguration mit einem Konfigurations-Token an die anderen Teilnehmer. Nach erfolgreichem Umlauf des Konfigurations-Token wird der Datenaustausch vom Ringmaster mit dessen Daten- bzw. Kontroll-Token weitergeführt. Information eines ausgegliederten Teilnehmers wird vom jeweiligen Vorgänger aus dem Daten- bzw. Kontroll-Token entfernt. Dies stellt sicher, daß Nachrichten von allen intakten Teilnehmern empfangen werden.

Treten während der Fehlerverarbeitung weitere Fehler auf, so wird dies über einen Token-Timeout erkannt. Die Fehlerverarbeitung wird neu gestartet. Die mehrphasige Fehlerverarbeitung mit Init- und Konfigurations-Token gestattet auch die Tolerierung von Mehrfachfehlern.

Das oben beschriebene Verfahren zur Bestimmung des temporären Ringmasters läßt sich in nachstehende Merkmale gliedern:
a) ein Teilnehmer, welcher einen Fehler erkannt hat (Token-Timeout) verschickt einen Init-Token mit der Sequenznummer des zuletzt versendeten Daten- bzw. Kontroll-Token,
b) ein Teilnehmer, welcher einen Init-Token erhält, versendet einen Init-Token mit einer Sequenznummer, welche aus dem Maximalwert der Sequenznummer des zuletzt versendeten Daten-Token und der Sequenznummer des erhaltenen Init-Token gebildet wird,
c) ein Teilnehmer, welcher zuvor einen Init-Token versendet hat und einen Init-Token mit einer Sequenznummer erhält, welche kleiner ist als die Sequenznummer des zuletzt versendeten Init-Token, verwirft den empfangenen Init-Token,
d) ein Teilnehmer, welcher zuvor einen Init-Token versendet hat und einen Init-Token mit einer Sequenznummer erhält, welche identisch ist mit der Sequenznummer des zuletzt versendeten Init-Token (Daten- bzw. Kontroll-Token), erkennt sich als Ringmaster, überträgt die geänderte Systemkonfiguration ringförmig an alle Teilnehmer und setzt anschließend die Übertragung mit dem zuletzt gültigen Daten- bzw. Kontroll-Token fort.

## Patentansprüche

1. Verfahren zur Nachrichtenübertragung nach dem Erzeuger/Verbraucher-Prinzip zwischen Teilnehmern in einem verteilten System mit Token-Passing und mit Zeitüberwachung zur Störungserkennung, dadurch gekennzeichnet, daß zur - auch im Störungsfall - konsistenten Nachrichtenübertragung
a) entweder eine als Ring-Multicast (R-MC) bezeichnete erste Verfahrensvariante verwendet wird, bei der ein Daten-Token im Ring geführt wird, das Information enthält zur Nachrichten-(Nutzdaten-)Übertragung, Steuerung der Sendeerlaubnis, Sequentialisierung der Nachrichten-Reihenfolge sowie zur gegenseitigen Teilnehmer-Überwachung,
b) oder eine als Datagramm-Multicast (D-MC) bezeichnete zweite Verfahrensvariante verwendet wird, bei der ein Kontroll-Token im Ring geführt wird und Nachrichten (Nutzdaten) im physikalischen Multicast mit Datagrammen übertragen werden, wobei
b1) im Fall einer zugriffsgesteuerten Nachrichtenübertragung (D-MC/Z)
- die Nachrichtenübertragung nur vom jeweiligen Teilnehmer mit Kontroll-Token-Besitz erfolgt, und
- das Kontroll-Token Information enthält zur Steuerung der Sendeerlaubnis, zum Austausch von Bestätigungs- und Reihenfolgeinformation sowie zur gegenseitigen Teilnehmer-Überwachung, und
b2) im Fall einer spontanen Nachrichtenübertragung (D-MC/S)
- die Nachrichtenübertragung spontan, unabhängig von der Position des Kontroll-Tokens nach einem konkurrierenden Zugriffsverfahren erfolgt, und
- das Kontroll-Token Information zum Austausch von Bestätigungs- und Reihenfolgeinformation sowie zur gegenseitigen Teilnehmer-Überwachung enthält, und
c) bei allen Verfahrensvarianten (R-MC, D-MC) ein spezielles Token-Verfahren verwendet wird, das auf der im Übertragungsverfahren gegebenen Übereinstimmung des Überwachungs- und Informationsstands der Teilnehmer basiert, und mit dem im Fehlerfall ein aus einer fortlaufenden Sequenznummer abgeleitetes folgerichtiges Wiederaufsetzen - ohne Beeinträchtigung der Datenkonsistenz - durchgeführt wird.

2. Verfahren nach Anspruch 1, dadurch gekennzeichnet, daß LAN-basierte standardisierte Kommunikationsprotokolle, wie z.B. TCP/IP, UDP/IP, ISO/OSI verwendet werden.

3. Verfahren nach Anspruch 1 oder 2, dadurch gekennzeichnet, daß Nachrichten (Nutzdaten) blockweise übertragen werden.

4. Verfahren nach Anspruch 3, dadurch gekennzeichnet, daß bei Verwendung des Ring-Multicast(R-MC)-Verfahrens das Daten-Token Nachrichten enthält.

5. Verfahren nach Anspruch 3, dadurch gekennzeichnet, daß bei Verwendung des Datagramm-Multicast(D-MC/Z oder D-MC/S)-Verfahrens das Kontroll-Token einen ersten Kopfteil mit Information gemäß einem LAN-Bus-Standard, einen zweiten Kopfteil gemaß einem LAN-Protokoll-Standard, einen dritten Kopfteil mit Token- und Kennungs-Information sowie Bestätigungs- und Reihenfolge-Information übertragener Nachrichtenblöcke enthält.

6. Verfahren nach Anspruch 5, dadurch gekennzeichnet, daß jeder Nachrichtenblock (Datagramm) einen ersten Kopfteil mit Information gemäß einem LAN-Bus-Standard, einen zweiten Kopfteil gemäß einem LAN-Protokoll-Standard, einen dritten Kopfteil mit Kennungs-Information sowie Nachrichten enthält.

7. Verfahren nach einem der vorstehenden Ansprüche, dadurch gekennzeichnet, daß die Nachrichten einen Kopfteil mit Selektor zur Nachrichten-Auswahl und Längenangabe enthalten, an welchen sich Nutzdaten anschließen.

8. Verfahren nach einem der vorstehenden Ansprüche, dadurch gekennzeichnet, daß bei Störungen bzw. Ausfällen von Teilnehmern selbsttätig eine Ausgliederung des fehlerhaften Teilnehmers erfolgt.

9. Verfahren nach einem der vorstehenden Ansprüche, dadurch gekennzeichnet, daß zur Informationsübertragung wahlweise ein Einfach- oder Doppelbussystem benutzt wird, wobei im Doppelbussystem im Störungsfall selbsttätig und ohne Beeinträchtigung der Datenkonsistenz eine Umschaltung auf das redundante Bussystem erfolgt.

10. Verfahren nach einem der vorstehenden Ansprüche, dadurch gekennzeichnet, daß neben der Informationsübertragung mit Token bzw. Datagrammen zusätzliche asynchrone Nachrichten übertragen werden zur Integration weiterer Ringteilnehmer, Überprüfung der Funktionstüchtigkeit von Teilnehmern und zur Fortsetzung des Netzwerkbetriebs nach einer Störung.

11. Verfahren nach einem der vorstehenden Ansprüche, dadurch gekennzeichnet, daß zum folgerichtigen Wiederaufsetzen im Störungsfall für jeden Übertragungszustand eine eindeutige Kennung benutzt wird, die dadurch gebildet wird, daß jedes Daten- bzw. Token-Protokoll mit einer Sequenznummer versehen wird, welche von jedem Teilnehmer beim Sendevorgang erhöht wird.

12. Verfahren nach einem der vorstehenden Ansprüche, dadurch gekennzeichnet, daß alle Fehler oder Ausfälle im System zum Verlust des Token führen, der durch eine als Token-Timeout bezeichnete Überwachung von den Teilnehmern erkannt wird, woraufhin nachstehende Verfahrensschritte durchgeführt werden:
a) im ersten Schritt prüfen Teilnehmer, die einen Fehler erkannt haben, den Zustand des Nachfolgers, wobei defekte Teilnehmer ausgegliedert werden,
b) im zweiten Schritt wird die möglicherweise geänderte System-Konfiguration und ein temporärer Ringmaster ermittelt, der derjenige Teilnehmer ist, der vor Auftreten des/der Fehler im System den zuletzt gültigen Daten- bzw. Kontroll-Token gesendet hat, d. h. der Teilnehmer mit der höchsten Sequenznummer im System, und
c) im dritten Schritt überträgt der Ringmaster mit einem Konfigurations-Token die geänderte System-Statusinformation in einem Umlauf an alle intakten Teilnehmer und setzt nach erfolgreich erfolgtem Umlauf die Übertragung des Daten- bzw. Kontroll-Token fort.

13. Verfahren nach Anspruch 12, dadurch gekennzeichnet, daß die Prüfung des Zustands des Nachfolgers im Schritt a) dadurch erfolgt, daß ein Teilnehmer zum Nachfolger ein Telegramm "Linkcheck-Request" überträgt und der
a) falls dieser intakt ist, von ihm ein Antworttelegramm "Linkcheck-Acknowledge" erhält, worauf der Teilnehmer ein Aufforderungstelegramm "Init-Token" an den Nachfolger sendet, das diesen auffordert, seinerseits seinen Nachfolger zu prüfen, bzw.
b) falls der Nachfolger defekt ist, dieser - gegebenenfalls nach mehrmaligen Versuchen - ausgegliedert wird und in das Telegramm "Init-Token" die geänderte System-Statusinformation an den Nachfolger des ausgegliederten Teilnehmers übertragen wird.

14. Verfahren nach Anspruch 12 und 13, dadurch gekennzeichnet, daß im Verfahrensschritt b) gemäß Anspruch 12 der temporäre Ringmaster für das folgerichtige Wiederaufsetzen dadurch ermittelt wird, daß
- ein Teilnehmer, welcher einen Fehler erkannt hat (Token-Timeout) einen Init-Token mit der Sequenznummer des zuletzt versendeten Daten- bzw. Kontroll-Token verschickt,
- ein Teilnehmer, welcher einen Init-Token erhält, einen Init-Token mit einer Sequenznummer versendet, welche aus dem Maximalwert der Sequenznummer des zuletzt versendeten Daten-Token und der Sequenznummer des erhaltenen Init-Token gebildet wird,
- ein Teilnehmer, welcher zuvor einen Init-Token versendet hat und einen Init-Token mit einer Sequenznummer erhält, welche kleiner ist als die Sequenznummer des zuletzt versendeten Init-Token, den empfangenen Init-Token verwirft,
- ein Teilnehmer, welcher zuvor einen Init-Token versendet hat und einen Init-Token mit einer Sequenznummer erhält, welche identisch ist mit der Sequenznummer des zuletzt versendeten Init-Token (Daten- bzw. Kontroll-Token), sich als Ringmaster erkennt, die geänderte Systemkonfiguration ringförmig an alle Teilnehmer überträgt und anschließend die Übertragung mit dem zuletzt gültigen Daten- bzw. Kontroll-Token fortsetzt.

15. Verfahren nach einem der Ansprüche 12 bis 14, dadurch gekennzeichnet, daß in einem System mit redundantem Bus im Verfahrensschritt a) gemäß Anspruch 12 die Prüfung des Nachfolgers unter abwechselnder Benutzung der beiden Bussysteme erfolgt, um festzustellen, ob der Fehler in einem der Bussysteme oder im Nachfolger liegt.
